# FASCICULE DE BREVET EUROPEEN

(11) **EP 2 659 156 B1**
(45) Date de publication et mention de la délivrance du brevet: **06.04.2016**
(21) Numéro de dépôt: 11788865.1
(22) Date de dépôt: 01.12.2011
(51) Int. Cl.: F16D 55/226, F16D 65/14

(54) **FREIN A DISQUE A CARTOUCHE DE CONVERSION MUNIE D'UN DISPOSITIF ANTIMATAGE.**
SCHEIBENBREMSE MIT EINER UMWANDLUNGSKASSETTE MIT EINER MATTIERSCHUTZVORRICHTUNG
DISK BRAKE HAVING A CONVERSION CARTRIDGE PROVIDED WITH AN ANTI-MATTING DEVICE

(30) Priorité: 27.12.2010 FR 1005149
(43) Date de publication de la demande: 06.11.2013
(73) Titulaire: Chassis Brakes International B.V., 1011 VM Amsterdam (NL)
(72) Inventeur: VINCK, Jan, F-49250 Beaufort En Vallee (FR); MACE, Jean-Jacques, F-93600 Aulnay Sous Bois (FR)
(74) Mandataire: Hurwic, Aleksander Wiktor
(86) Numéro de dépôt international: PCT/EP2011/071509
(87) Numéro de publication internationale: WO 2012/089440

(56) Documents cités:
- EP-A1- 1 936 227
- FR-A1- 2 800 825
- US-A1- 2010 252 375

## Description

### Domaine de l'invention

La présente invention concerne un frein à disque comprenant un étrier flottant chevauchant le disque de frein portant un patin fixe et formant un cylindre logeant un piston portant un patin mobile pour serrer le disque de frein,
- le piston étant commandé par le circuit hydraulique et par le système de freins de stationnement par l'intermédiaire d'une cartouche de conversion de mouvement transformant le mouvement de pivotement du levier du frein, porté par l'étrier en un mouvement de translation pour pousser le piston de frein,
- le cylindre ayant une partie avant logeant le piston de frein et une partie arrière formant un logement recevant la cartouche de conversion à forme de révolution venant contre le patin mobile et le fond du cylindre,
- la cartouche retenue dans le logement par un clip traversant de manière étanche un orifice axial du fond du cylindre pour relier son arbre de commande au levier du frein de stationnement.

### Etat de la technique

On connaît déjà un tel frein à disque décrit dans le document EP 1 936 227. Ce document concerne notamment un procédé d'assemblage d'un frein à disque et en particulier l'assemblage de la cartouche convertissant le mouvement de rotation du levier du frein en un mouvement de translation du piston de frein pour mettre en oeuvre le frein de stationnement ou le libérer.

Dans ce montage la partie arrière de la cartouche comporte un pion venant dans un trou du fond du logement recevant la cartouche dans le cylindre de l'étrier de frein. Cette réalisation est relativement compliquée à fabriquer et à installer ; de plus le pion subit des efforts de rotation importants lors de l'actionnement du frein à main.

### But de l'invention

La présente invention a pour but de simplifier la fabrication de l'étrier de frein en réduisant le nombre de pièces constituant la cartouche de conversion de mouvement et la fabrication de l'étrier et en évitant les risques de matage.

### Exposé et avantages de l'invention

A cet effet l'invention concerne un frein à disque du type défini ci-dessus, caractérisé en ce que,
A) la cartouche de conversion comprend:
   - une partie arrière appuyée contre le fond du logement du cylindre et se composant :
      * d'un palier en forme de manchon muni d'une collerette appuyée autour d'un orifice de passage du fond du logement traversé partiellement par le manchon, et
      * d'un arbre de commande relié au levier pivotant et portant un premier plateau,
   - une partie avant appuyée contre le piston de frein, mobile en translation par rapport au cylindre mais bloquée en rotation, et se composant:
      * d'un piston muni d'un deuxième plateau destiné à coopérer avec le premier plateau de l'arbre de commande avec interposition de billes mobiles dans des rampes dans les deux plateaux pour transformer le mouvement de rotation relatif entre les deux plateaux en un mouvement de translation du piston, et
      * d'une cage de retenue du piston de conversion dans le cylindre par l'intermédiaire d'un clip, un ressort de rappel étant interposé entre la cage et le piston pour agir contre le mouvement de translation généré par les plateaux et les billes,
B) le cylindre comporte, au niveau de sa partie arrière formant le logement recevant la cartouche de conversion, au moins une rainure longitudinale et le piston de conversion comporte à sa périphérie, une nervure longitudinale de section complémentaire à celle de la rainure longitudinale, pour coopérer avec celle-ci et bloquer la rotation de la partie avant de la cartouche en la laissant libre en translation.
C) un dispositif antimatage interposé entre les branches du piston et les rainures du logement de l'étrier, comprend un anneau portant des pattes réparties suivant la répartition des branches du piston et ayant des languettes cylindriques, cintrées sensiblement suivant la forme de la section des branches pour couvrir celles-ci.

Ainsi, le blocage en rotation du piston de la cartouche, c'est-à-dire de l'écrou mobile de la cartouche est réalisé directement sur l'étrier ; le blocage en rotation se fait par la ou les nervures longitudinales portées par la partie avant de la cartouche et la ou les rainures longitudinales homologues réalisées dans le logement de la cartouche dans l'étrier avec interposition du dispositif antimatage .

On supprime ainsi de manière très avantageuse le boîtier arrière de la cartouche et son pion antirotation logé dans un trou au fond de l'étrier. Le boîtier de la partie arrière de l'état de la technique est remplacé selon l'invention par un simple palier arrière à section en forme de L. La suppression du boîtier de la partie arrière améliore la purgeabilité du circuit de frein puisqu'il n'y a aucune pièce fermée dans la cartouche de conversion selon l'invention. Cela simplifie la réalisation de la cage et raccourcit la longueur du cylindre ou fût de l'étrier recevant la cartouche.

L'invention simplifie également l'assemblage de la cartouche qui se fait directement en bord de chaîne d'assemblage du frein et supprimant une machine dédiée à la préparation de la cartouche assemblée. Il n'y a plus de clipage de la cage sur le boîtier arrière ce qui évite le risque de formation de copeaux.

Enfin, cette forme de réalisation peut s'appliquer à des pistons de plus petit diamètre que celui des pistons utilisés actuellement avec des efforts identiques exercés par les pistons.

Suivant une autre caractéristique avantageuse, le logement de la cartouche dans l'étrier comporte trois rainures longitudinales et le piston est muni de trois nervures longitudinales, les rainures étant réparties de manière équiangulaire et les nervures étant dans des positions homologues à celles des rainures.

Ces trois rainures longitudinales et les trois nervures longitudinales du piston de la cartouche, permettent un excellent blocage en rotation du piston de la cartouche tout en évitant les problèmes liés au couple important qui peut être appliqué au piston de conversion par la liaison constituée par la transmission à billes entre les plateaux. Cet excellent blocage en rotation est également favorable au rappel du piston de conversion lorsque le frein de stationnement est libéré.

Suivant une autre caractéristique avantageuse au moins une rainure du logement a une section en arc de cercle et notamment en demi-cercle et la nervure portée par le piston de la cartouche a une section en forme d'arc de cercle homologue, c'est-à-dire homothétique de celle de la rainure, tenant compte de l'épaisseur du dispositif antimatage. Cette forme de rainure et de nervure est très facile à réaliser.

Suivant une autre caractéristique avantageuse, la nervure longitudinale est constituée par une branche dépassant le plateau vers l'arrière et chevauchant au moins une fraction de longueur axiale de la partie arrière de la cartouche de conversion.

La longueur de la nervure longitudinale constituée ainsi par une branche et surtout la longueur des nervures longitudinales, de préférence au nombre de trois, du piston de conversion, permettent un excellent guidage et tenue du piston dans l'étrier sans risque de matage. Les branches dépassant vers l'arrière permettent de réduire la longueur axiale de la cartouche de conversion sans que cela ne soit au détriment du guidage d'autant plus que les branches sont à la fois maintenues par le palier arrière et le plateau de l'arbre de commande de la cartouche, dans l'espace libre entouré par les branches. Dans ces conditions, même sous un effort qui pourrait être violent, les branches ne peuvent sortir de leurs rainures puisqu'elles y sont maintenues, en quelque sorte bloquées, par la présence du dispositif antimatage de la partie arrière de la cartouche.

Suivant une autre caractéristique avantageuse, le logement de la cartouche comporte un épaulement recevant en appui la collerette de la cage et une gorge périphérique pour recevoir le clip.

Suivant une autre caractéristique avantageuse, la cage est une pièce en acier élastique de forme globale tronconique ayant un fond en forme de couronne portant des lames reliées à une collerette et des lames intermédiaires, d'extrémité libre, recevant le clip.

Cette cage et la coopération de la cage d'une part avec l'épaulement et d'autre part avec la gorge périphérique recevant le clip, garantissent un excellent accrochage solidaire de la cartouche de conversion dans son logement. Cet accrochage est solidaire et ne peut s'ouvrir de lui-même. Il nécessite un outil particulier tel qu'un manchon, prenant appui sur la forme tronconique de la cage pour resserrer progressivement les lamelles de la cage, escamoter la collerette et la dégager de sa gorge. La mise en place se fait dans les mêmes conditions, en procédant dans l'ordre inverse.

Globalement, le frein à disque équipé d'une telle cartouche de conversion de mouvement avec un dispositif antimatage est simple à réaliser et à assembler grâce au nombre réduit de pièces. Il permet un excellent fonctionnement du frein et en garantit la fiabilité.

### Dessins

La présente invention sera décrite ci-après de manière plus détaillée à l'aide des dessins annexés dans lesquels:
- la figure 1 est une vue en coupe schématique d'un étrier de frein placé sur le disque de frein, montrant le piston de frein sans la cartouche de conversion,
- la figure 2 montre en vue de côté légèrement en perspective la cartouche de conversion sans le dispositif antimatage,
- la figure 3 est une vue en perspective du piston de la cartouche de conversion,
- la figure 4 est une vue en perspective d'un premier mode de réalisation du dispositif antimatage de la cartouche de conversion,
- la figure 5 montre dans ses parties 5A, 5B, deux vues en perspective suivant des directions différentes d'un second mode de réalisation d'un dispositif antimatage intégré à la cage de la cartouche,
- les figures 6A, 6B sont des vues en perspective suivant des directions différentes de la cartouche de conversion équipée du dispositif antimatage selon les figures 5A, 5B.

### Description d'un mode de réalisation de l'invention

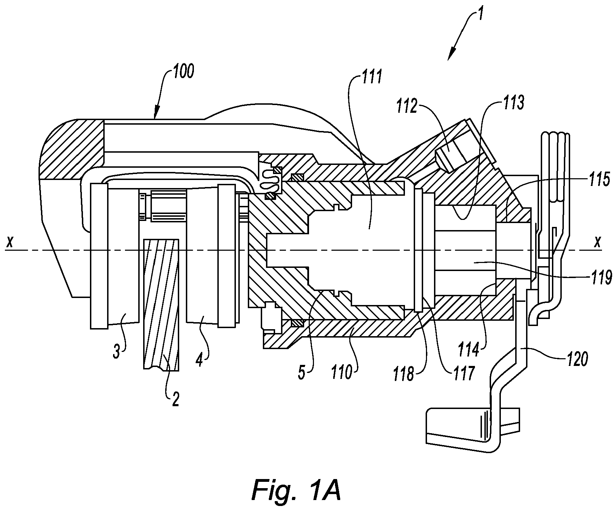

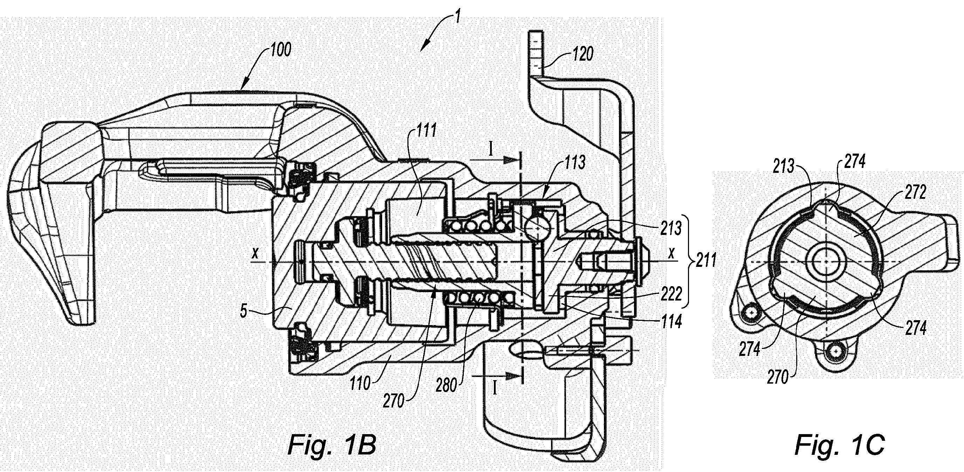

Par convention, pour simplifier la description du frein à disque selon l'invention, on utilisera l'orientation donnée par l'axe xx de la figure 1 dont le côté gauche est dirigé vers ce qui est considéré comme l'avant et le côté droit, dirigé vers ce qui est considéré comme l'arrière: ainsi l'avant du piston de frein est tourné vers son patin de frein et l'arrière du piston de frein, tourné vers son logement dans l'étrier. De même, la cartouche de conversion aura une partie avant du côté du piston de frein et une partie arrière du côté du fond de son logement dans l'étrier.

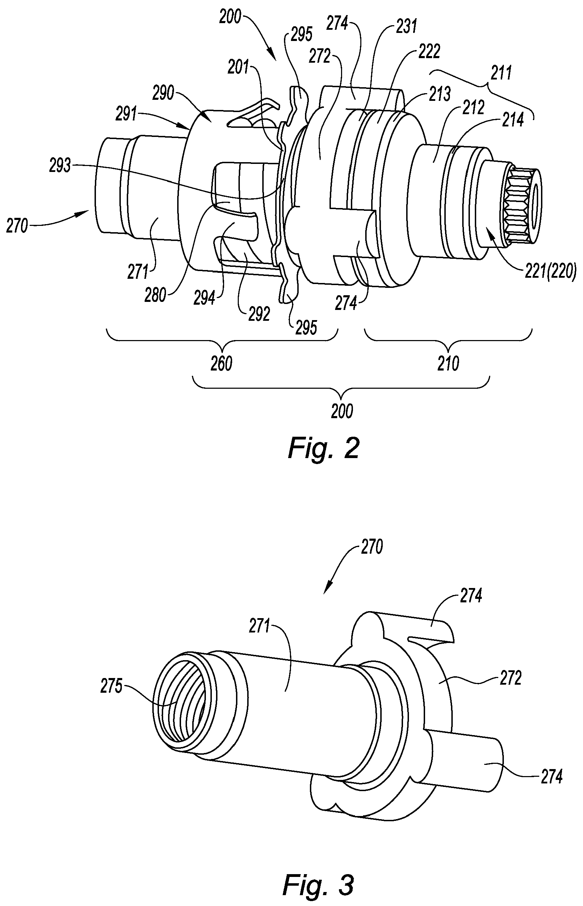

Selon la figure 1, l'invention concerne un frein à disque 1 associé au circuit de freinage et à la commande du frein de stationnement. L'étrier flottant 100 chevauche le disque de frein 2 et porte un patin fixe 3 et un patin mobile 4. Ce dernier est actionné par un piston de frein 5 logé dans le cylindre 110 (ou fût) de l'étrier 100. Le cylindre 110 délimite une chambre étanche 111 reliée au circuit de frein par un branchement 112 non détaillé. Cette chambre étanche 111 loge une cartouche de conversion de mouvement 200 (figure 2) appliquée contre le fond 114 du logement 113 du cylindre de l'étrier. Le logement 113 prolonge le cylindre 110 du piston de frein. Le fond 114 est muni d'un orifice 115 que traverse de manière étanche l'extrémité de la cartouche 200 (figure 2) pour la liaison d'entraînement avec le levier pivotant 120 relié à la commande du frein à main, dont le mouvement de rotation (pivotement) sera transformé en un mouvement de translation appliqué au piston de frein 5.

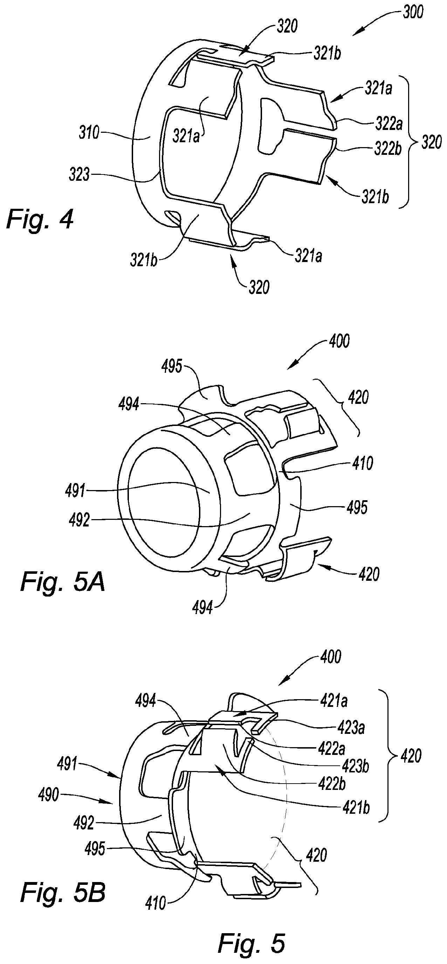

La cartouche de conversion de mouvement 200 représentée à la figure 2 se compose d'une partie arrière 210 et d'une partie avant 260. Elle est représentée sans le dispositif antimatage 300 (figure 4) et 400

### (figures 5A, B)

La partie arrière 210 est formée d'un palier 211 comprenant un manchon 212 muni d'une collerette 213. Le manchon 212 se place dans l'orifice 115 du fond 114 de l'étrier 100 et sa collerette 213 s'appuie sur la surface du fond 114 entourant l'orifice 115. Le palier 211 muni d'un joint torique 214 pour assurer l'étanchéité par rapport à l'orifice 115, reçoit un arbre de commande 220 constitué par une partie cylindrique 221 terminée à l'avant par un premier plateau 222. La partie cylindrique 221 traverse le manchon 212 du palier 211 pour venir en saillie à l'arrière de l'étrier et recevoir le levier d'actionnement 120 du frein de stationnement. Le plateau 222 s'appuie contre la collerette 213 du palier 211. La face avant du plateau 222 est munie de gorges de profondeur variable pour coopérer avec des billes portées par une cage 231 et qui coopèrent dans les mêmes conditions avec le piston de conversion 270 bloqué en rotation mais mobile en translation.

La partie avant 260 de la cartouche 200 se compose du piston de conversion 270 constitué par un manchon 271 portant à l'arrière un plateau 272 (second plateau) dont la face est munie de rainures de profondeur variable, complémentaires dans leur disposition et leur forme à celles des rainures du premier plateau 222 de l'arbre de commande 220. Les billes roulent dans les rainures homologues du plateau 222 de l'arbre de commande 220 et de celui 272 du piston 270 pour transformer le mouvement de rotation du plateau 222 de l'arbre de commande 220 en un mouvement de translation du piston de conversion 270 par le jeu des rampes complémentaires formées par les rainures comme cela est connu en soi. La partie avant 260 comprend également un ressort de compression 280 emmanché sur le manchon cylindrique 271 du piston de conversion et s'appuyant d'une part contre le plateau 272 du piston 270 et d'autre part contre le fond 291 d'une cage 290 également installée sur le manchon 271 du piston 270.

La cage 290 est une pièce en acier élastique de forme globale tronconique comprenant une couronne constituant le fond 291 côté avant, portant des lames 292 reliées à une collerette fendue 293 tournée vers l'extérieur avec des parties en saillie 294 et des lames intermédiaires 295, libres. Un clip 201 est installé dans la cage 290 autour et entre les lames 292, 294, pour retenir la cartouche 200 dans son logement 113 de l'étrier 100. Pour la mise en place d'une manière connue en soi, la collerette fendue 293 et le clip 201 sont comprimés à l'aide d'un outil en forme de manchon. Le clip 201 retient la cage 290 en coopérant avec une gorge périphérique 118 du cylindre 110 et la collerette fendue 293 prend place dans le logement 113 contre un épaulement 117 dans l'étrier 100 comme cela est réalisé par le procédé de montage décrit au document EP 1 936 227 cité ici à titre de référence. La cartouche 200 est ainsi bloquée dans son logement 113 dans une direction par son appui par l'intermédiaire de la collerette fendue 293 contre l'épaulement 117 et dans la direction opposée par le clip 201 accroché dans la gorge périphérique 118, seuls restant libres en mouvement, la tige de commande 220 et le piston 270.

Le piston 270 (figure 3) comporte des nervures longitudinales constituées dans cet exemple, par des branches 274 prolongeant le plateau 272 vers l'arrière. Ces branches 274 à section de forme semi-circulaire ou de lunules sont logées en coulissement dans des rainures 119 de section correspondante réalisées dans la paroi du logement 113 de l'étrier 100 dans des positions homologues à celles des branches avec interposition d'un dispositif antimatage 300, 400 selon les figures 4 ou 5A, 5B. Les branches 274 sont de préférence au nombre de trois réparties de manière équiangulaire autour de l'axe xx du logement 113. Le piston 270 est ainsi bloqué en rotation dans le logement 113 tout en restant libre en translation. Les branches 274 chevauchent la partie arrière 210 au niveau du bord du plateau 222 et de la collerette 213 du palier 211. Le disque formant la cage 231 tenant les billes est également maintenu par les branches 274 ce qui est important pour la réalisation du sous-ensemble constitué par la cartouche de conversion 200 et facilite considérablement sa mise en place dans le logement 113.

Après installation de la cartouche 200, l'arbre de commande 220 et son plateau 222 sont en revanche libres en rotation de sorte que le mouvement de rotation de l'arbre de commande 220 se traduit par une rotation relative de son plateau 222 par rapport au plateau 272 intégré au piston 270 ce qui produit le mouvement de translation du piston 270, transmis au piston de frein 5.

Le piston de conversion 270 s'appuie contre l'arrière du piston de frein 5 par un compensateur d'usure non représenté, logé dans le piston 270 formant l'écrou d'une liaison vis-écrou. La compensation de l'usure des patins de frein se fait de manière connue de l'homme du métier lors du mouvement de retrait de l'écrou, à la libération du frein de stationnement.

La figure 4 montre un dispositif antimatage 300 destiné à être interposé entre les branches 274 du piston 270 et les rainures 119 du logement 113 de l'étrier 100.

Le dispositif antimatage 300 est une pièce en tôle avec un anneau cylindrique 310 portant des pattes 320 formée chacune de deux lamelles 321a, b munies de languettes cylindriques cintrées 322a, b ayant sensiblement le rayon de la section circulaire des nervures en forme de branches 274 de façon à s'interposer, et le cas échéant à s'appliquer, sur les nervures 274; les lamelles 321a, b viennent alors de part et d'autre de chaque nervure 274.

L'anneau 310 coiffe partiellement le contour du plateau 272 entre les nervures formant les nervures 274 et le bord 223 de l'anneau entre les lamelles 321a, b vient contre l'avant des nervures 274.

Dans ce dispositif 300, les pattes 320 sont réparties de manière équiangulaire en nombre égal à celui des branches 274, c'est-à-dire au nombre de trois.

Le dispositif antimatage 300 est engagé sur le plateau 272 des branches 274 du piston 270 avant la mise en place du ressort 280 et de la cage 290 ainsi que du clip 201. Ce dispositif antimatage 300 n'est pas représenté sur la cartouche de conversion de mouvement 200 des figures 2A, 2B.

La figure 5 dans ses parties 5A, 5B ; montre une variante de réalisation du dispositif antimatage 400 combiné dans ce cas à une cage. Le dispositif 400 se compose d'un anneau 410 en forme de collerette fendue portant des pattes 420 réparties de manière équiangulaire et en nombre correspondant à celui des nervures en forme de branches 274 du piston 270, c'est-à-dire au nombre de trois avec une répartition à 120°. Les pattes 420 se composent chacune de deux lamelles 421a, b portant des languettes cylindriques 422a, b cintrées ayant sensiblement une section homothétique de celle des branches 274 du piston 270.

Les lamelles 421, b se terminent par des becs de retenue 423a, b de manière à venir derrière l'extrémité des branches 274 et à s'accrocher derrière celles-ci tout en conservant l'élasticité des pattes 420.

Les pattes 420 sont portées par l'anneau en forme de collerette fendue 410 munie de parties en saillie 495 dans la direction radiale, assimilable à la collerette 293 et à ses parties en saillie 295 de la cage 290 du mode de réalisation de la figure 2. La collerette fendue 410 est reliée par des lames 492 à un anneau avec un retour formant un fond 491. Le fond 491 porte également des lames intermédiaires 494 venant élastiquement en saillie. L'ensemble des lames 492 et des lames intermédiaires 494 avec le fond 491 et l'anneau en forme de collerette fendue 410, présentent globalement une forme tronconique.

Selon le mode de réalisation représenté, l'ensemble a une structure ternaire, avec trois pattes 420, trois lames 492 et trois lames intermédiaires 494. Les lames intermédiaires 494 ont la même fonction que les lames intermédiaires 294 de la cage 290. Les éléments 491, 492, 494, 495 avec la collerette fendue 410 et ses parties en saillie, constituent une cage 490.

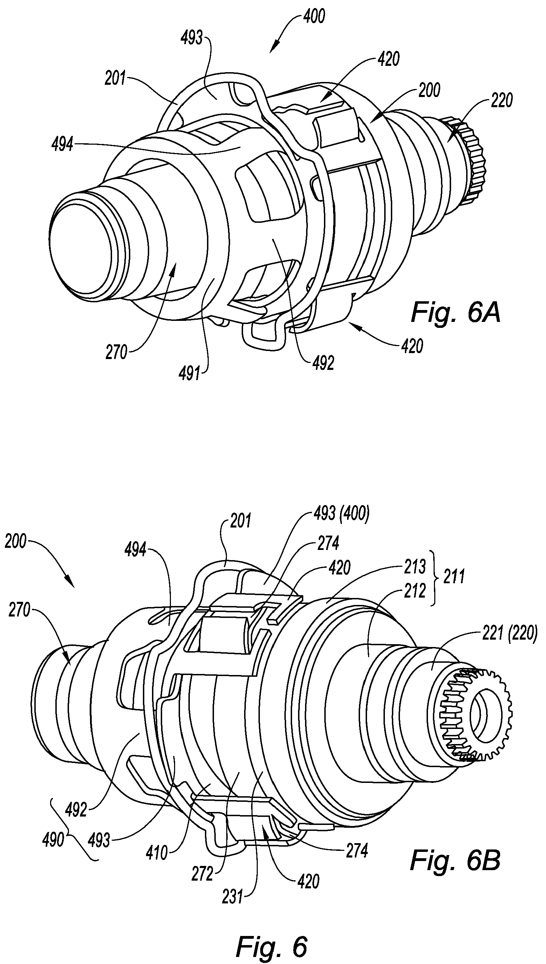

Les figures 6A, 6B montrent le montage du dispositif antimatage 400 sur la cartouche de conversion 200 avec le clip 201. La figure 6B montre notamment l'accrochage des becs de retenue 423a, b derrière les branches 274 du piston 270, branches par ailleurs entourées par les languettes cylindriques 422a, b et les lamelles 421a, b s'appuyant sur la périphérie du plateau 272 du piston. Les autres parties de la cartouche également référencées ne seront pas décrites une nouvelle fois.

La cartouche 200 est composée d'un nombre réduit de pièces et constitue une unité assemblée, prête à être installée dans le fût de l'étrier de frein 100. Cette mise en place ne gêne ni ne complique l'installation ultérieure du piston de frein et ne perturbe pas ensuite la purge du circuit de frein.

La présente invention concerne le domaine des systèmes de freins à disque de véhicules automobiles.

### NOMENCLATURE DES ELEMENTS PRINCIPAUX

- 1: Frein à disque
- 5: Piston de frein

- 100: Etrier
- 110: Cylindre
- 111: Chambre de piston
- 113: Logement
- 114: Fond du logement
- 115: Orifice du fond du logement
- 117: Epaulement
- 118: Gorge périphérique
- 119: Rainure
- 120: Levier

- 200: Cartouche de conversion de mouvement
- 201: Clip
- 210: Partie arrière de la cartouche
- 211: Palier à section en forme de T
- 212: Manchon
- 213: Collerette
- 214: Joint torique
- 220: Arbre de commande
- 221: Partie cylindrique
- 222: Premier plateau
- 231: Cage recevant les billes
- 260: Partie avant de la cartouche
- 261: Piston de conversion
- 262: Manchon
- 263: Deuxième plateau
- 274: Nervure/branche longitudinale
- 275: Ecrou
- 280: Ressort de compression
- 290: Cage
- 291: Fond
- 292: Lame
- 293: Collerette fendue
- 294: Lame intermédiaire
- 295: Partie en saillie

- 300: Dispositif antimatage
- 310: Anneau
- 320: Pattes
- 321a,b: Lamelles
- 322a,b: Languettes cylindriques cintrées
- 323: Bord de l'anneau

- 400: Dispositif antimatage
- 410: Anneau en forme de collerette fendue
- 420: Pattes
- 421a,b: Lamelles
- 422a,b: Languettes cylindriques
- 423a,b: Becs de retenue
- 490: Cage
- 491: Fond
- 492: Lame
- 493: Collerette fendue
- 494: Lame intermédiaire
- 495: Partie en saillie

## Revendications

1. Frein à disque comprenant un étrier flottant (100) chevauchant le disque de frein (2) portant un patin fixe (3) et formant un cylindre (110) logeant un piston (5) portant un patin mobile (4) pour serrer le disque de frein,
• le piston (5) étant commandé par le circuit hydraulique et par le système de frein de stationnement par l'intermédiaire d'une cartouche de conversion de mouvement (200) transformant le mouvement de pivotement du levier du frein de stationnement, porté par l'étrier (100) en un mouvement de translation pour pousser le piston de frein (5),
• le cylindre (110) ayant une partie avant logeant le piston de frein (5) et une partie arrière formant un logement (113) recevant la cartouche de conversion (200) à forme de révolution venant contre le patin mobile et le fond du cylindre,
• la cartouche (200) retenue dans le logement (113) par un clip (201), traversant de manière étanche un orifice axial du fond (114) du cylindre pour relier son arbre de commande au levier (120) du frein de stationnement,
frein **caractérisé en ce que**
A) la cartouche de conversion (200) comprend:
- une partie arrière (210) appuyée contre le fond (114) du logement (113) du cylindre (110) et se composant :
* d'un palier (211) en forme de manchon (212) muni d'une collerette (213) appuyée autour d'un orifice de passage (115) du fond du logement (113) traversé partiellement par le manchon (212), et
* d'un arbre de commande (220) relié au levier pivotant (120) et portant un premier plateau (222),
- une partie avant (260) appuyée contre le piston de frein (5), mobile en translation par rapport au cylindre (110) mais bloquée en rotation, et se composant :
* d'un piston (270) muni d'un deuxième plateau (272) destiné à coopérer avec le premier plateau (222) de l'arbre de commande (220) avec interposition de billes mobiles dans des rampes dans les deux plateaux (222, 272) pour transformer le mouvement de rotation relatif des deux plateaux (222, 272) en un mouvement de translation du piston (270), et
* d'une cage de retenue (290) du piston de conversion (200) dans le cylindre (110) par l'intermédiaire d'un clip (201),
* un ressort de rappel (280) étant interposé entre la cage (290) et le piston (270) pour agir contre le mouvement de translation généré par les plateaux (222, 272) et les billes,
B) le cylindre (110) comporte, au niveau de sa partie arrière formant le logement (113) recevant la cartouche de conversion (200), au moins une rainure longitudinale (119) et le piston de conversion (270) comporte à sa périphérie au moins une nervure longitudinale (274) de section complémentaire à celle de la rainure longitudinale (119), pour coopérer avec celle-ci et bloquer la rotation de la partie avant (260) de la cartouche (200) en laissant le piston (270) libre en translation,
C) un dispositif antimatage (300, 400) interposé entre les nervures (274) du piston (270) et les rainures (119) du logement (113) de l'étrier (100), comprend un anneau (310, 410) portant des pattes (320, 420) réparties suivant la répartition des nervures (274) du piston et ayant des languettes cylindriques (322a, b; 422a, b), cintrées sensiblement suivant la forme de la section des branches (274) pour couvrir celles-ci dans les rainures longitudinales (119) du logement (113) du cylindre (110).

2. Frein à disque selon la revendication 1,
**caractérisé en ce que**
le logement (113) de la cartouche (200) dans l'étrier (100) comporte trois rainures longitudinales (119) et le piston (270) est muni de trois nervures longitudinales (274), les rainures (119) étant réparties de manière équiangulaire et les nervures (274) étant dans des positions homologues à celles des rainures (119).

3. Frein à disque selon la revendication 1,
**caractérisé en ce qu'**
la rainure (119) du logement (113) a une section en arc de cercle et notamment en demi-cercle et la nervure (274) portée par le piston (270) de la cartouche (200) a une section en forme d'arc de cercle homothétique à celle de la rainure (119), tenant compte de l'épaisseur du dispositif antimatage (300, 400).

4. Frein à disque selon la revendication 1,
**caractérisé en ce que**
la nervure longitudinale (274) est constituée par une branche dépassant le plateau (272) vers l'arrière et chevauchant au moins une fraction de longueur axiale de la partie arrière (210).

5. Frein à disque selon la revendication 1,
**caractérisé en ce que**
le logement (113) de la cartouche (200) comporte un épaulement (117) pour recevoir en appui la collerette (293) de la cage (290) et une gorge périphérique (118) pour recevoir le clip (201).

6. Frein à disque selon la revendication 1,
**caractérisé en ce que**
la cage (290) est une pièce en acier élastique de forme globale tronconique ayant un fond (291) en forme de couronne portant des lames (292) reliées à une collerette fendue (293) et des lames intermédiaires (294), à l'extrémité libre, recevant le clip (201).

7. Frein à disque selon la revendication 1,
**caractérisé en ce que**
le dispositif antimatage (400) comporte des pattes (420) solidaires d'un anneau en forme de collerette fendue (410) muni de parties en saillie (491) et reliée par des lames (492) à un anneau avec un retour formant un fond (491) portant lui-même des pattes intermédiaires (494) en saillie élastiquement, et l'ensemble constituant une cage (490) portant les pattes (420).

8. Frein à disque selon la revendication 7,
**caractérisé en ce que**
les pattes (420) comportent des lamelles (421a, b) terminées par des becs de retenue (423a, b) au-delà des languettes cylindriques cintrées (422a, b) pour s'accrocher derrière l'extrémité des nervures (274) du piston (270).

## Patentansprüche

1. Scheibenbremse, einen Schwimmsattel (100) umfassend, der die Bremsscheibe (2) überfasst, einen festen Bremsbelagträger (3) tragend und einen Zylinder (110) ausbildend, in dem ein Kolben (5) untergebracht ist, einen beweglichen Bremsbelagträger (4) tragend, um die Bremsscheibe festzuklemmen,
• wobei der Kolben (5) durch den Hydraulikkreislauf und durch das Parkbremssystem mittels einer Bewegungsumwandlungskartusche (200) gesteuert wird, welche die Schwenkbewegung des Parkbremshebels, der von dem Sattel (100) getragen wird, in eine Translationsbewegung umwandelt, um den Bremskolben (5) zu drücken,
• wobei der Zylinder (110) einen vorderen Teil, in dem der Bremskolben (5) untergebracht ist, und einen hinteren Teil aufweist, der eine Aufnahme (113) ausbildet, welche die Umwandlungskartusche (200) in Umdrehungsform aufnimmt, die gegen den beweglichen Bremsbelagträger und den Boden des Zylinders anliegt,
• wobei die Kartusche (200), die in der Aufnahme (113) durch einen Clip (201) zurückgehalten wird, eine axiale Öffnung des Bodens (114) des Zylinders auf abdichtende Weise zur Verbindung ihrer Steuerwelle mit dem Hebel (120) der Parkbremse durchquert,
Bremse, **dadurch gekennzeichnet, dass**
A) die Umwandlungskartusche (200) umfasst:
- einen hinteren Teil (210), der sich gegen den Boden (114) der Aufnahme (113) des Zylinders (110) abstützt und sich zusammensetzt aus:
* einem Lager (211) in Form einer Buchse (212), die mit einem Flansch (213) versehen ist, der sich um eine Durchgangsöffnung (115) am Boden der Aufnahme (113) abstützt, durch welche die Buchse (212) teilweise hindurchgeht, und
* einer Steuerwelle (220), die mit dem Schwenkhebel (120) verbunden ist und eine erste Scheibe (222) trägt,
- einen vorderen Teil (260), der sich gegen den Bremskolben (5) translationsbeweglich im Verhältnis zu dem Zylinder (110) abstützt, aber bei der Drehung blockiert ist, und sich zusammensetzt aus:
* einem Kolben (270), der mit einer zweiten Scheibe (272) versehen ist, die dazu vorgesehen ist, mit der ersten Scheibe (222) der Steuerwelle (220) mit dazwischenliegenden beweglichen Kugeln in den Schrägen in den beiden Scheiben (222, 272) zusammenzuwirken, um die Drehbewegung im Verhältnis zu den beiden Scheiben (222, 272) in eine Translationsbewegung des Kolbens (270) umzuwandeln, und
* einem Rückhaltekäfig (290) des Umwandlungskolbens (200) in dem Zylinder (110) mittels eines Clips (201),
* einer Rückstellfeder (280), die zwischen dem Käfig (290) und dem Kolben (270) zwischengelegt ist, auf die Translationsbewegung, die durch die Scheiben (222, 272) und die Kugeln erzeugt wird, einwirkend,
B) der Zylinder (110) in Höhe seines hinteren Teils, welcher die Aufnahme (113) ausbildet, welche die Umwandlungskartusche (200) aufnimmt, mindestens eine längliche Nut (119) umfasst, und der Umwandlungskolben (270) an seinem Umfang mindestens eine längliche Rippe (274) mit einem Querschnitt komplementär zu demjenigen der länglichen Nut (119) umfasst, um mit dieser zusammenzuwirken und um die Drehung des vorderen Teils (260) der Kartusche (200) zu blockieren, wobei der Kolben (270) frei zur Translationsbewegung bleibt,
C) eine Festsetzungsschutzvorrichtung (300, 400), die zwischen den Rippen (274) des Kolbens (270) und den Nuten (119) der Aufnahme (113) des Sattels (100) liegt, einen Ring (310, 410) umfasst, der Laschen (320, 420) trägt, die gemäß der Verteilung der Rippen (274) des Kolbens verteilt sind, und zylindrische Zungen (322a, b; 422a, b) aufweist, die im Wesentlichen gemäß der Querschnittsform der Schenkel (274) zentriert sind, um diese in den länglichen Nuten (119) der Aufnahme (113) des Zylinders (110) zu überdecken.

2. Scheibenbremse nach Anspruch 1, **dadurch gekennzeichnet, dass** die Aufnahme (113) der Kartusche (200) in dem Sattel (100) drei längliche Nuten (119) umfasst und der Kolben (270) mit drei länglichen Rippen (274) versehen ist, wobei die Nuten (119) in gleichmäßigen Winkelabständen verteilt sind, und sich die Rippen (274) in ähnlichen Stellungen wie die der Nuten (119) befinden.

3. Scheibenbremse nach Anspruch 1, **dadurch gekennzeichnet, dass** die Nut (119) der Aufnahme (113) einen kreisbogenförmigen und insbesondere einen halbkreisförmigen Querschnitt aufweist und die Rippe (274), die der Kolben (270) der Kartusche (200) trägt, einen kreisbogenförmigen Querschnitt aufweist, der ähnlich dem der Nut (119) liegt, wobei die Dicke der Festsetzungsschutzvorrichtung (300, 400) berücksichtigt wird.

4. Scheibenbremse nach Anspruch 1, **dadurch gekennzeichnet, dass** die längliche Rippe (274) aus einem Schenkel besteht, der über die Scheibe (272) nach hinten hinaussteht und mindestens einen Bruchteil der axialen Länge des hinteren Teils (210) überlappt.

5. Scheibenbremse nach Anspruch 1, **dadurch gekennzeichnet, dass** die Aufnahme (113) der Kartusche (200) eine Schulter (117), um den Flansch (293) des Käfigs (290) anschlagend aufzunehmen, und eine Umfangsrille (118) umfasst, um den Clips (201) aufzunehmen.

6. Scheibenbremse nach Anspruch 1, **dadurch gekennzeichnet, dass** der Käfig (290) aus einem elastischen Stahlteil allgemein kegelstumpfförmiger Gestalt mit einem Boden (291) in Form einer Krone, der Streifen (292) trägt, die mit einem geschlitzten Flansch (293) verbunden sind, und aus Zwischenstreifen (294) an dem freien Ende besteht, das den Clips (201) aufnimmt.

7. Scheibenbremse nach Anspruch 1, **dadurch gekennzeichnet, dass** die Festsetzungsschutzvorrichtung (400) Laschen (420) umfasst, die fest mit einem Ring in Form eines geschlitzten Flansches (410) verbunden sind, der mit vorspringenden Teilen (491) versehen und mit Streifen (492) mit einem Ring mit einem Rücksprung verbunden ist, der einen Boden (491) ausbildet, der wiederum elastisch hervorstehend Zwischenlaschen (494) trägt, und das Ganze einen Käfig (490) ausbildet, der die Laschen (420) trägt.

8. Scheibenbremse nach Anspruch 7, **dadurch gekennzeichnet, dass** die Laschen (420) Lamellen (421a, b) umfassen, die mit Rückhaltespitzen (423a, b) über die zylinderförmigen zentrierten Zungen (422a, b) hinausgehend enden, um sich hinter dem Ende der Rippen (274) des Kolbens (270) zu verhaken.

## Claims

1. Disc brake comprising a floating calliper (100) which straddles the brake disc (2) which supports a fixed block (3) and forming a cylinder (110) which accommodates a piston (5) which supports a mobile block (4) in order to clamp the brake disc,
• the piston (5) being controlled by the hydraulic circuit and by the parking brake system by means of a movement conversion cartridge (200) which transforms the pivoting movement of the parking brake lever, which is supported by the calliper (100), into movement of translation in order to thrust the brake piston (5);
• the cylinder (110) having a front part which accommodates the brake piston (5) and a rear part which forms a receptacle (113) to receive the conversion cartridge (200) with a form of revolution which abuts the mobile block and the base of the cylinder;
• the cartridge (200) is retained in the receptacle (113) by a clip (201) which passes in a sealed manner through an axial orifice in the base (114) of the cylinder, in order to connect its control shaft to the parking brake lever (120),
which brake is **characterized in that**
A) the conversion cartridge (200) comprises:
- a rear part (210) which is supported against the base (114) of the receptacle (113) of the cylinder (110), and consists of:
* a bearing (211) in the form of a sleeve (212) provided with a collar (213) which is supported around an orifice (115) for passage of the base of the receptacle (113), through which the sleeve (212) partially passes, and
* a control shaft (220) which is connected to the pivoting lever (120) and supports a first plate (222) ;
- a front part (260) which is supported against the brake piston (5), and is mobile in translation relative to the cylinder (110) but blocked in rotation, and consists of:
* a piston (270) provided with a second plate (272) which is designed to co-operate with the first plate (222) of the control shaft (220), with interposition of mobile balls in ramps in the two plates (222, 272), in order to transform the relative movement of rotation between the two plates (222, 272) into movement of translation of the piston (270), and
* a cage (290) for retention of the conversion piston (200) in the cylinder (110) by means of a clip (201),
* a return spring (280) being interposed between the cage (290) and the piston (270) in order to act against the movement of translation generated by the plates (222, 272) and the balls;
B) at the level of its front part which forms the receptacle (113) which receives the conversion cartridge (200), the cylinder (110) comprises at least one longitudinal groove (119), and the conversion piston (270) comprises on its periphery at least one longitudinal rib (274) with a cross section complementary to that of the longitudinal groove (119), in order to co-operate with the latter and block the rotation of the front part (260) of the cartridge (200), whilst leaving the piston (270) free in translation;
C) an anti-deformation device (300, 400), interposed between the ribs (274) of the piston (270) and the grooves (119) of the receptacle (113) of the calliper (100), comprises a ring (310, 410) which supports lugs (320, 420) distributed according to the distribution of the ribs (274) of the piston, and having cylindrical tongues (322a, b; 422a, b), which are substantially curved according to the form of the cross section of the branches (274), in order to cover the latter in the longitudinal grooves (119) of the receptacle (113) of the cylinder (110).

2. Disc brake according to Claim 1,
**characterized in that**
the receptacle (113) for the cartridge (200) in the calliper (100) comprises three longitudinal grooves (119), and the piston (270) is provided with three longitudinal ribs (274), the grooves (119) being distributed equi-angularly, and the ribs (274) being in positions homologous to those of the grooves (119).

3. Disc brake according to Claim 1,
**characterized in that**
the groove (119) of the receptacle (113) has a cross section in the form of an arc of a circle, and in particular a half circle, and the rib (274) which is supported by the piston (270) of the cartridge (200) has a cross section in the form of an arc of a circle which is homothetic relative to that of the groove (119), taking into account the thickness of the anti-deformation device (300, 400).

4. Disc brake according to Claim 1,
**characterized in that**
the longitudinal rib (274) is constituted by a branch which extends from the plate (272) towards the rear, and straddles at least a fraction of axial length of the rear part (210).

5. Disc brake according to Claim 1,
**characterized in that**
the receptacle (113) of the cartridge (200) comprises a shoulder (117) which receives in a supported manner the collar (293) of the cage (290) and a peripheral groove (118) to receive the clip (201).

6. Disc brake according to Claim 1,
**characterized in that**
the cage (290) is a part made of resilient steel with a globally frusto-conical form and a base (291) in the form of a crown which supports plates (292) connected to a split collar (293), and intermediate plates (294), at the free end, which receive the clip (201).

7. Disc brake according to Claim 1,
**characterized in that**
the anti-deformation device (400) comprises lugs (420) which are integral with a ring in the form of a split collar (410) which is provided with projecting parts (491) and is connected by plates (492) to a ring with a return which forms a base (491) which itself supports intermediate lugs (494) which project resiliently and the assembly constitutes a cage (490) which supports the lugs (420).

8. Disc brake according to Claim 7,
**characterized in that**
the lugs (420) comprise strips (421a, b) which end in retention noses (423a, b) beyond the curved cylindrical tongues (422a, b), in order to be locked behind the end of the ribs (274) of the piston (270).
